# EUROPEAN PATENT APPLICATION

(11) **EP 4 795 995 A1**
(43) Date of publication of application: **26.08.2026**
(21) Application number: 26158410.6
(22) Date of filing: 13.02.2026
(51) Int. Cl.: A47L 1/02

(54) **WINDOW CLEANING APPARATUS AND METHOD OF CONTROLLING THE SAME**

(30) Priority: 17.02.2025 KR 20250020217
(71) Applicant: LG Electronics Inc., Yeongdeungpo-gu Seoul 07336 (KR)
(72) Inventor: KEE, Hyunshin, Seoul (KR); PARK, Janghee, Seoul (KR); YOON, Heesang, Seoul (KR); KANG, Chanyoung, Seoul (KR); LEE, Jeongah, Seoul (KR)
(74) Representative: Schornack, Oliver

(57) **Abstract**

The present disclosure relates to a window cleaning apparatus.

The window cleaning apparatus includes: a housing forming an outer appearance and having a first surface that faces a window; and a cleaning solution tank disposed inside the housing and storing a cleaning solution supplied to a spray nozzle. The housing has a tank hole formed in the first surface, so that the cleaning solution tank is inserted and withdrawn through the tank hole.

## Description

### BACKGROUND OF THE INVENTION

### 1. Field of the invention

The present disclosure relates to a window cleaning apparatus, and more particularly to a window cleaning apparatus that sprays a cleaning solution to a window.

### 2. Description of the Related Art

Generally, it is difficult to clean the exterior surfaces of windows installed on the walls of a building. Accordingly, if left unattended, windows can be easily contaminated by external dust, pollutants, etc., which can degrade lighting performance of windows.

A specialized cleaning service may be used to clean the exterior surfaces of windows, but this can incur periodic costs.

Korean Registered Patent No. KR 10-1654876B1 as a related art discloses a window cleaning tool. However, it is cumbersome in that a user is required to use the cleaning tool directly in a room in order to clean a window. Further, as the cleaning tool is used in a room, it is difficult to clean the entire exterior surface of a window.

In addition, Korean Registered Patent No. KR 10-1920917B1 as a related art discloses a window cleaning device that cleans a window while moving on the outside of the window.

However, the related art merely discloses a moving structure while wiping the exterior surface of a window, such that the window may not be cleaned properly.

### SUMMARY

It is an objective of the present disclosure to solve the above and other problems.

It is another objective of the present disclosure to provide a window cleaning apparatus capable of cleaning foreign objects on the exterior surface of a window.

It is yet another objective of the present disclosure to provide a window cleaning apparatus capable of allowing a user to easily replace a cleaning solution tank.

It is yet another objective of the present disclosure to provide a window cleaning apparatus in which a cleaning solution tank is stably connected when mounted in a housing.

It is yet another objective of the present disclosure to provide a window cleaning apparatus capable of preventing a position of a tank cover from interfering with a cleaning operation of a cleaning module or preventing interference of a net.

It is yet another objective of the present disclosure to provide a method of controlling a window cleaning apparatus capable of notifying a replacement time of a cleaning solution by detecting a water level of a cleaning solution tank.

It is yet another objective of the present disclosure to provide a window cleaning apparatus in which when mounted in a housing, a cleaning solution tank stably supplies a cleaning solution to a pump or a spray nozzle.

It is yet another objective of the present disclosure to provide a window cleaning apparatus in which a cleaning solution tank and a connection pipe are coupled in close contact with each other.

In accordance with an aspect of the present disclosure, the above and other objectives can be accomplished by providing a window cleaning apparatus including: a housing forming an outer appearance and having a first surface that faces a window; and a cleaning solution tank disposed inside the housing and storing a cleaning solution supplied to a spray nozzle.

The housing may have a tank hole formed in the first surface, so that the cleaning solution tank is inserted and withdrawn through the tank hole.

The tank cover is configured to open toward a front where a window is positioned.

The housing may include a tank cover that opens and closes the tank hole. The window cleaning apparatus may further include a cleaning module including the spray nozzle that protrudes from the first surface of the housing.

The tank hole may be formed below the cleaning module.

The window cleaning apparatus may further include a net module disposed on the first surface of the housing, and configured to adjust a length of a net extending over the housing. The net module may be disposed above the cleaning module.

The main body may include: a first pump configured to supply the cleaning solution, stored in the cleaning solution tank, to the spray nozzle: and a connection pipe connecting the cleaning solution tank and the first pump.

When the cleaning solution tank is disposed in the housing, the cleaning solution tank may be connected to the connection pipe.

A connection port connected to the connection pipe may be disposed on a rear surface of the cleaning solution tank.

The window cleaning apparatus may further include a display configured to provide information about the cleaning solution tank. The display may be disposed on the first surface of the housing.

The window cleaning apparatus may further include a controller configured to control the spray nozzle.

The cleaning solution tank may include a water level sensor configured to detect a water level of the cleaning solution stored in the cleaning solution tank. The controller provides a notification through the display when the water level detected by the water level sensor is less than or equal to a set level.

The cleaning solution tank may include an inner wall spaced apart from one side of the water level sensor, and extending in an up-down direction.

The spray nozzle may be disposed on the first surface of the housing so as to spray the cleaning solution toward the window.

In accordance with another aspect of the present disclosure, the above and other objectives can be accomplished by providing a method of controlling a window cleaning apparatus, the method including: detecting a water level of a cleaning solution tank that stores a cleaning solution; when the detected water level is lower than or equal to a set height, providing notification for replenishment of the cleaning solution. In addition, the method may include detecting whether a window is open, and moving the window cleaning apparatus to a replacement position.

The method may further include, prior to moving the window cleaning apparatus to the replacement position, moving the window cleaning apparatus to a basic position.

The method may further include, after providing the notification for replenishment of the cleaning solution, stopping operation of a first pump that supplies the cleaning solution in the cleaning solution tank to the spray nozzle.

The detecting whether the window is open may be performed based on a change in distance from the window, by using an ultrasonic sensor.

The method may further include: detecting the cleaning solution tank by using a tank detection sensor; when the cleaning solution tank is reinstalled, detecting a water level of the cleaning solution tank by using a water level sensor; and when the water level of the cleaning solution tank exceeds a set height, providing notification indicating that cleaning is available.

A window cleaning apparatus of the present disclosure includes a frame movably mounted on a window frame, and a main body movably mounted on the frame and configured to clean a window.

The main body may include: a housing forming an outer appearance and having a first surface that faces a window; and a cleaning solution tank disposed inside the housing and storing a cleaning solution supplied to a spray nozzle.

The housing may have a tank hole formed in the first surface, so that the cleaning solution tank is inserted and withdrawn through the tank hole.

A rail that extends in an up-down direction may be disposed on the frame.

The main body may include a mover that moves upward and downward along the rail, and an ultrasonic sensor configured to detect whether the window is open.

When the ultrasonic sensor detects that the window is open, the mover moves the main body upward from a lower end of the frame by a predetermined distance.

In order to achieve the above objectives, a window cleaning apparatus according to an embodiment of the present disclosure includes: a housing having a first surface that faces a window; and a cleaning solution tank detachably disposed in the housing and storing a cleaning solution supplied to a spray nozzle.

The window cleaning apparatus may include: a connection pipe through which the cleaning solution stored in the cleaning solution tank is supplied to the spray nozzle; and a pipe connector disposed at one end of the connection pipe and connected to the cleaning solution tank.

The cleaning solution tank may include a connection port connected to the pipe connector. When the cleaning solution tank is disposed inside the housing, the connection port may be connected to the pipe connector.

An insertion space, which is recessed so that a portion of the pipe connector is disposed therein, may be formed in a rear surface of the cleaning solution tank. The connection port may be disposed at a front of the insertion space.

The cleaning solution tank may include a recessed wall that is recessed forward from the rear surface of the tank body to define the insertion space. The recessed wall may have a greater diameter than the connection port.

The connection port may include a port valve opening and closing a valve hole formed in the connection port, and a port sealer formed around the valve hole. The port valve may close the valve hole by coming into contact with the port sealer.

The port valve may include a valve plate for opening and closing the valve hole, a moving guider for guiding forward and backward movement of the valve plate, and a stopper plate that limits backward movement of the port valve.

The connection port may include a port perimeter wall defining a valve installation space in which the port valve is disposed, and a guide portion defined by the guide hole in which the moving guider moves. A supply hole, through which the cleaning solution inside the cleaning solution tank flows to the valve installation space, may be formed on one side of the port perimeter wall.

The pipe connector may include a connector body including an insertion pipe having a communication hole formed therein, and a moving body disposed in the connector body so as to be movable forward and backward. When the pipe connector is connected to the connection port, the communication hole is exposed to the outside.

The connector body may include an outer separation pipe spaced apart from the insertion pipe in an outer circumferential direction of the insertion pipe. A recess, into which a portion of the moving body is inserted, may be formed between the insertion pipe and the outer separation pipe.

When the pipe connector is connected to the connection port, the communication hole is positioned inside the connection port.

The pipe connector may include a pair of connector sealers spaced apart from each other in a longitudinal direction of the insertion pipe and disposed on a circumference of the insertion pipe. The communication hole is formed between the pair of connector sealers.

A window cleaning apparatus of the present disclosure includes: a housing having a first surface that faces a window; a cleaning solution tank detachably disposed in the housing and storing a cleaning solution supplied to a spray nozzle; a connection pipe through which the cleaning solution stored in the cleaning solution tank is supplied to the spray nozzle; and a pipe connector disposed at one end of the connection pipe and connected to the cleaning solution tank.

The housing may include a tank cover that opens and closes the tank hole formed in the first surface, so that the cleaning solution tank is inserted and withdrawn through the tank hole.

The cleaning solution tank may include a connection port connected to the pipe connector.

When the tank cover is closed, an inner surface of the tank cover may cause the connection port to come into close contact with the pipe connector.

The pipe connector may be fixedly positioned inside the housing.

The connection port may be disposed on a rear surface of the cleaning solution tank.

Other detailed matters of the exemplary embodiments are included in the detailed description and the drawings.

### EFFECTS OF THE INVENTION

A window cleaning apparatus according to the present disclosure has one or more of the following effects.

Firstly, the window cleaning apparatus of the present disclosure may automatically clean the exterior surface of a window. The exterior surface of the window may be kept clean.

Secondly, a main body moves upward to a region where a tank cover opens, thereby allowing a user to easily replace a cleaning solution tank.

Thirdly, when mounted in a housing, a cleaning solution tank may be stably mounted to a connection pipe via a connection port.

Fourthly, a tank cover is disposed below a cleaning module, and thus, does not interfere with the operation of the cleaning module. In addition, a cleaning solution tank may be replaced by opening the tank cover, if necessary. Further, a net module is disposed above the cleaning module, such that the cleaning solution tank may be replaced without interference of a net.

Fifthly, by detecting a water level of a cleaning solution tank, it is possible to notify a replacement time of the cleaning solution tank, thereby continuously maintaining a cleaning function of the window cleaning apparatus.

Sixthly, by providing a sealer structure of a pipe connector and a communication hole structure disposed therebetween, it is possible to prevent a cleaning solution, discharged from a cleaning solution tank, from leaking to the outside.

The effects of the disclosure are not limited to the effects mentioned above, and other effects not mentioned will be clearly understood by those skilled in the art from the description below.

### BRIEF DESCRIPTION OF THE DRAWINGS

FIG. 1 is a perspective view of a window cleaning apparatus disposed on one side of a window according to an embodiment of the present disclosure.
FIG. 2 is a perspective view of a frame and a main body of a window cleaning apparatus according to an embodiment of the present disclosure.
FIG. 3 is perspective view of one side of a main body according to an embodiment of the present disclosure.
FIG. 4 is perspective view of the other side of a main body according to an embodiment of the present disclosure.
FIG. 5 is perspective view illustrating a state in which a cleaning solution tank is withdrawn from a main body, according to an embodiment of the present disclosure.
FIG. 6 is a diagram explaining a structure in which a cleaning solution tank and a first pump are connected, according to an embodiment of the present disclosure.
FIG. 7 is a diagram explaining an internal structure of a cleaning solution tank, according to an embodiment of the present disclosure.
FIG. 8 is a cross-sectional side view of a connection port according to an embodiment of the present disclosure.
FIG. 9 is a diagram illustrating a pipe connector and a port valve according to an embodiment of the present disclosure.
FIG. 10 is a diagram explaining a state in which a pipe connector is not completely connected to a connection port, according to an embodiment of the present disclosure.
FIG. 11 is a diagram explaining a state in which a pipe connector is completely connected to a connection port, according to an embodiment of the present disclosure.
FIG. 12 is a block diagram illustrating a controller and related configuration thereof according to an embodiment of the present disclosure.
FIG. 13 is a flowchart illustrating a method of controlling a window cleaning apparatus according to an embodiment of the present disclosure.
FIG. 14 is a flowchart illustrating a method of controlling a window cleaning apparatus, which is performed after the controlling method of FIG. 13.

### DETAILED DESCRIPTION

Advantages and features of the disclosure and methods of achieving them will be apparent from embodiments of the disclosure described in detail below, in conjunction with the accompanying drawings. However, the disclosure is not limited to the embodiments of the disclosure below and may be embodied in many different forms. Rather, the embodiments of the disclosure are provided so that this disclosure will be thorough and complete and will fully convey the concept of the disclosure to those of ordinary skill in the art. The disclosure should be defined by the scope of the claims. The same reference numerals refer to the same components throughout the specification.

It will also be understood that, although the terms first, second, third, etc. are used herein to describe various elements, these elements should not be limited by these terms. These terms are only used to distinguish one element from another.

Hereinafter, a window cleaning apparatus according to embodiments of the present disclosure will be described with reference to the accompanying drawings.

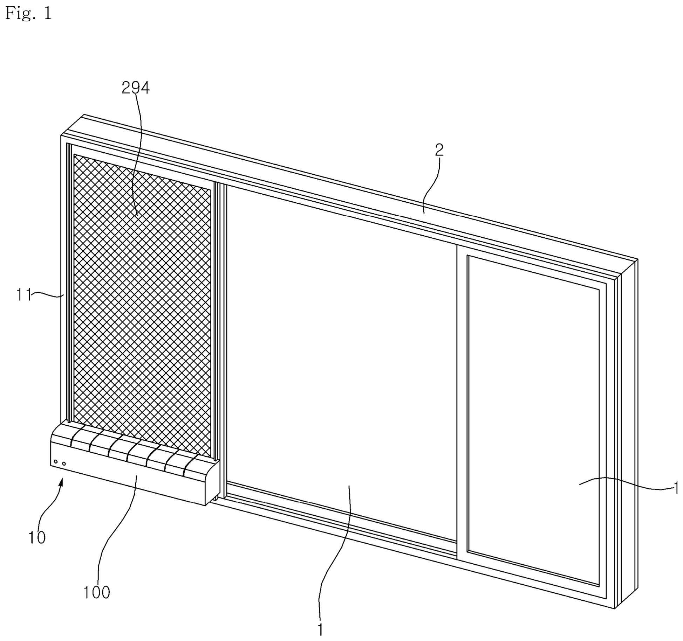

Referring to FIG. 1, a window cleaning apparatus mounted on a window frame will be described below.

A plurality of windows 1 may be installed in a window frame 2.

A window cleaning apparatus 10 is mounted on the window frame 2. The window cleaning apparatus 10 is disposed on one side of the window 1.

The window cleaning apparatus 10 is mounted on the window frame 2 so as to be movable from side to side. The window cleaning apparatus 10 may clean the window 1 while moving up and down on one side of the window 1.

The window cleaning apparatus 10 includes a frame 11 mounted on the window frame 2 and moving in a left-right direction of the window frame 2, and a main body 100 disposed on the frame 11 so as to be movable up and down.

The frame 11 is mounted on the window frame 2 so as to be movable from side to side. The frame 11 has a rectangular frame shape and mounted on the window frame 2. The frame 11 is disposed on one side of the window 1.

The main body 100 may clean the window 1 while moving up and down along the frame 11. The main body 100 may remove or wipe off foreign objects from the window 1.

The window cleaning apparatus 10 includes a net 294 coupled to each of the frame 11 and the main body 100. A vertical length of the net 294 may vary depending on the position of the main body 100.

The net 294 may be a screen to prevent external foreign objects, insects, or the like from entering a room.

One (or a first) end of the net 294 is coupled to an upper end of the frame 11. The other (or a second) end of the net 294 is coupled to the main body 100. The second end coupled to the main body 100 may be disposed in a rolled state.

Accordingly, a vertical length of the net 294 may be changed as the second end of the net 294 in a rolled state moves according to the position of the main body 100.

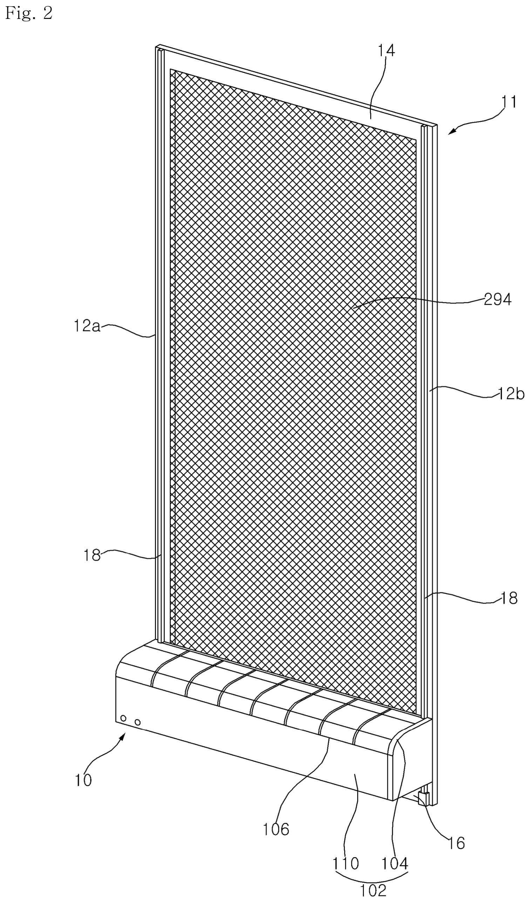

Referring to FIG. 2, the configuration of the frame and the main body will be described below.

The frame 11 may have a rectangular frame shape. The frame 11 may have the same shape as a net frame that is generally mounted on the outside of a window frame.

The frame 11 includes a pair of side frames 12a and 12b extending in an up-down direction and laterally spaced apart from each other.

The frame 11 includes an upper frame 14 connecting upper ends of the pair of side frames 12a and 12b, and a lower frame 16 connecting lower ends of the pair of side frames 12a and 12b.

A rail 18 configured to guide upward and downward movement of the main body 100 may be disposed on each of the pair of side frames 12a and 12b

The rail 18 is disposed on an outer peripheral surface of each of the pair of side frames 12a and 12b. The rail 18 protrudes outward from the outer peripheral surface of each of the pair of side frames 12a and 12b.

The main body 100 may move upward and downward along the rail 18.

The main body 100 includes a housing 102 forming an outer appearance. The housing 102 includes a lower case 110 defining a space therein, and an upper case 104 disposed over the lower case 110.

A component for cleaning a window and a component for moving the main body 100 upward and downward may be disposed inside the lower case 110.

A solar panel 106 may be disposed on the upper case 104. The solar panel 106 disposed on the upper case 104 may be a power source for operating the main body 100.

The upper case 104 may have a curved shape. The upper case 104 may have at least one inclined surface.

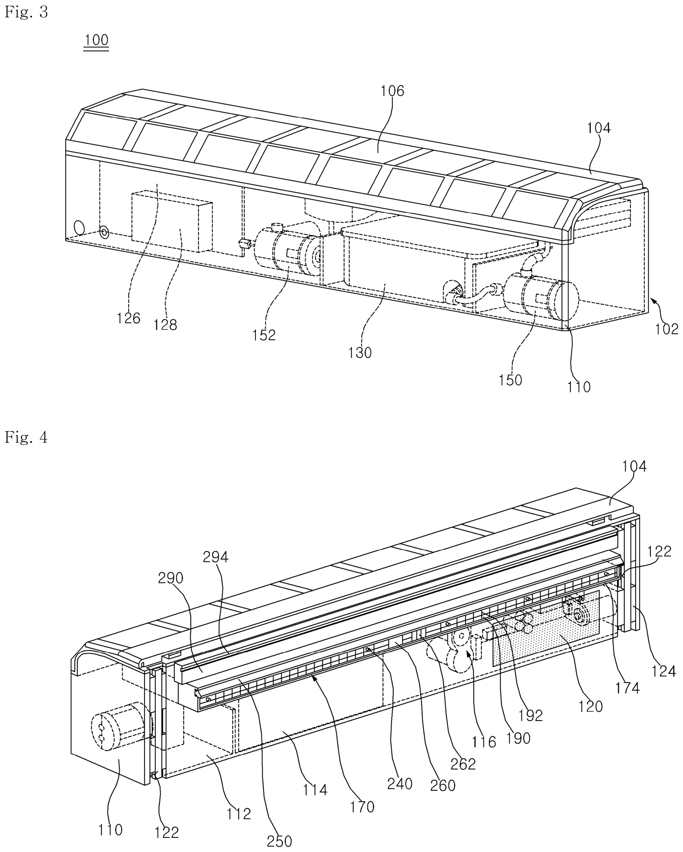

Referring to FIG. 3, the configuration of the main body will be described below.

The main body 100 includes the housing 102 forming an outer appearance.

The housing 102 includes the lower case 110, and the upper case 104 disposed over the lower case 110.

A space for providing a plurality of components is formed inside the lower case 110 and the upper case 104.

The solar panel 106 is disposed on the upper case 104.

The main body 100 includes a cleaning solution tank 130 disposed inside the housing 102 and storing a cleaning solution. The main body 100 includes a first pump 150 for pumping the cleaning solution stored in the cleaning solution tank 130.

The first pump 150 may supply the cleaning solution to a spray nozzle 240 which will be described below. The first pump 150 may supply the cleaning solution, stored in the cleaning solution tank 130, to the spray nozzle 240 (see FIG. 4).

The main body 100 includes a second pump 152 for draining the cleaning solution collected in the housing 102. The second pump 152 may drain the cleaning solution, collected in a cleaning module 170 which will be described below, to the outside of the main body 100.

The main body 100 may include a battery 128 disposed inside the housing 102 and storing power generated by the solar panel 106. The battery 128 may supply power so that the main body 100 may be operated. In addition, the battery 128 may receive power from a separate external power source.

The main body 100 may include a main board 126, which is disposed inside the housing 120, and on which a plurality of electronic components are mounted.

Referring to FIG. 4, another configuration of the main body will be described below.

The main body 100 includes a first surface 112 facing the window. The housing 102 includes the first surface 112 facing the window. The lower case 110 includes the first surface 112 facing the window.

When the main body 100 is mounted to the frame 11, the first surface 112 is disposed to face the window.

The main body 100 includes the cleaning module 170 configured to remove foreign objects present on the window. A portion of the cleaning module 170 protrudes from the first surface 112.

The cleaning module 170 may spray the cleaning solution toward the window. The cleaning module 170 comes into close contact with the window to wipe off foreign objects from the window. The cleaning module 170 may spray air toward the window.

The cleaning module 170 includes a scraper 250 formed on a front surface 174 thereof and coming into close contact with the window. The cleaning module 170 includes the spray nozzle 240 formed on the front surface 174 and configured to spray the cleaning solution toward the window.

An air outlet 192, through which air is discharged, is formed in the front surface 174 of the cleaning module 170. An air inlet 190, through which air or the cleaning solution is sucked, is formed in the front surface 174 of the cleaning module 170.

Here, the front surface 174 of the cleaning module 170 may be a surface facing the window.

An ultrasonic sensor 260 for detecting a distance from the window is disposed on one surface of the cleaning module 170. The ultrasonic sensor 260 may detect the distance from the window and allow the cleaning module 170 to come into close contact with the window.

A surface roughness sensor 262 for detecting contamination of the window is disposed on one surface of the cleaning module 170. The surface roughness sensor 262 may detect contamination of the window by detecting glossiness of the window.

A net module 290 is disposed outside the first surface 112 of the housing 102. The net module 290 is disposed above the cleaning module 170. The net 294 is exposed from the net module 290. The net module 290 defines a space therein in which the net 294 is disposed in a rolled state.

As the main body 100 moves up and down along the frame 11, the net rolled inside the net module 290 may be unrolled or rolled.

A tank cover 114 opening and closing an entrance, through which the cleaning solution tank 130 is inserted and withdrawn, is disposed on the first surface 112 of the housing 102. The first surface 112 of the housing 102 faces the room. Accordingly, a user may withdraw the cleaning solution tank 130 from the housing 102 or replace the cleaning solution tank 130, by placing the tank cover 114 in a position in which the entrance is open in the indoor space.

A display 120 may be disposed on the first surface 112 of the housing 102. The display 120 may visualize information, such as an operating state of the window cleaning apparatus 10 or external environment, and notify the user of the information.

A drive gear 116 connected to a gear module (not shown) mounted on the frame 11 is disposed on the first surface 112 of the housing 102. The main body 100 includes a driving motor 118 configured to rotate the drive gear 116.

When the main body 100 is disposed in a region of the lower end of the frame 11, the drive gear 116 meshes with the gear module 20. Accordingly, as the drive gear 116 rotates, the frame 11 and the main body 100 may move from side to side on the window frame 2.

A pair of case grooves 122 are formed in both end portions of the first surface 112. A mover 124 is disposed in each of the pair of case grooves 122. Each of the pair of case grooves 122 extends in the up-down direction.

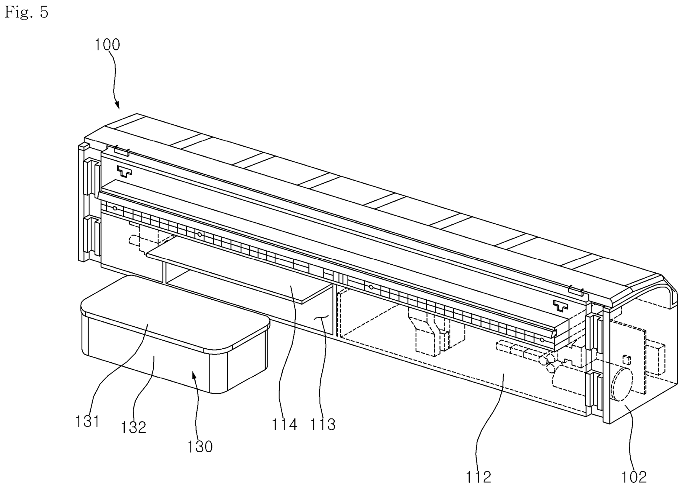

Referring to FIG. 5, a withdrawal structure of the cleaning solution tank will be described below.

The tank cover 114 is disposed on the first surface 112 of the housing 102. The tank cover 114 opens in a direction toward the window. The tank cover 114 may open and close a tank hole 113 formed in the first surface 112 of the housing 102.

When the tank cover 114 opens in a direction in which the window 1 is positioned, an occupant in a room may withdraw the cleaning solution tank 130 from the main body 100.

When the tank cover 114 opens the tank hole 113, the cleaning solution tank 130 may be inserted into or withdrawn from the housing 102 through the tank hole 113.

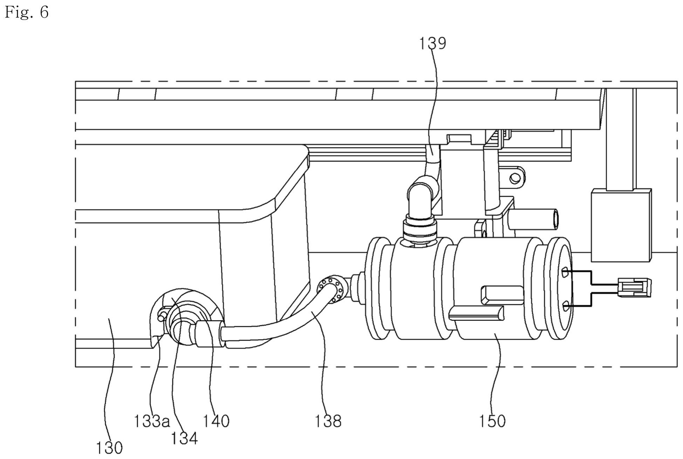

When inserted into the housing 102, the cleaning solution tank 130 is connected to a connection pipe 138 (see FIG. 6) that is connected to the first pump 150 (see FIG. 6).

The cleaning solution tank 130 includes a tank body 132 storing a cleaning solution, and a body cover 131 covering an upper portion of the tank body 132. The body cover 131 may be separated from the tank body 132.

Referring to FIG. 6, a connection structure of the cleaning solution tank and the pump inside the housing will be described below.

The cleaning solution tank 130 is connected to the first pump 150 by the connection pipe 138. The cleaning solution tank 130 is provided with a connection port 134 connected to the connection pipe 138. The connection port 134 is disposed on a rear surface of the cleaning solution tank 130.

An insertion space 133a, which is recessed forward, is formed in the rear surface of the cleaning solution tank 130. The connection port 134, to which the connection pipe 138 is connected, is disposed on the rear surface of the cleaning solution tank 130. The connection port 134 is disposed at the front of the insertion space 133a.

The insertion space 133a may be a space recessed inward from one side of the rear surface of the cleaning solution tank 130. A pipe connector 140 disposed at an end of the connection pipe 138 is disposed in the insertion space 133a.

The pipe connector 140 connected to the connection port 134 is disposed in the insertion space 133a, such that stable connection may be maintained.

The first pump 150 supplies the cleaning solution, stored in the cleaning solution tank 130, to the spray nozzle 240. An additional connection pipe 139 connected for supplying the cleaning solution to the spray nozzle 240 is disposed at a second side of the first pump 150.

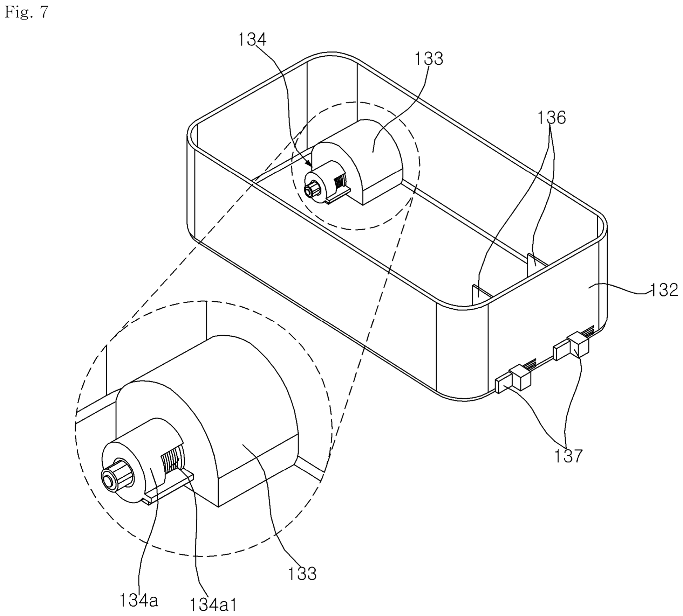

Referring to FIG. 7, a structure of the tank body of the cleaning solution tank will be described below.

The tank body 132 defines a space therein in which the cleaning solution is placed. The tank body 132 has an open top.

The connection port 134 is disposed at the rear of the tank body 132. A recessed wall 133 defining the insertion space 133a is formed at the rear of the tank body 132. The recessed wall 133 is recessed forward from the rear surface of the tank body 312.

The connection port 134 is disposed at the front of the recessed wall 133. The connection port 134 protrudes forward from the recessed wall 133. A supply hole 134a1, through which the cleaning solution inside the cleaning solution tank 130 is supplied to the first pump 150, is formed in a circumferential surface of the connection port 134.

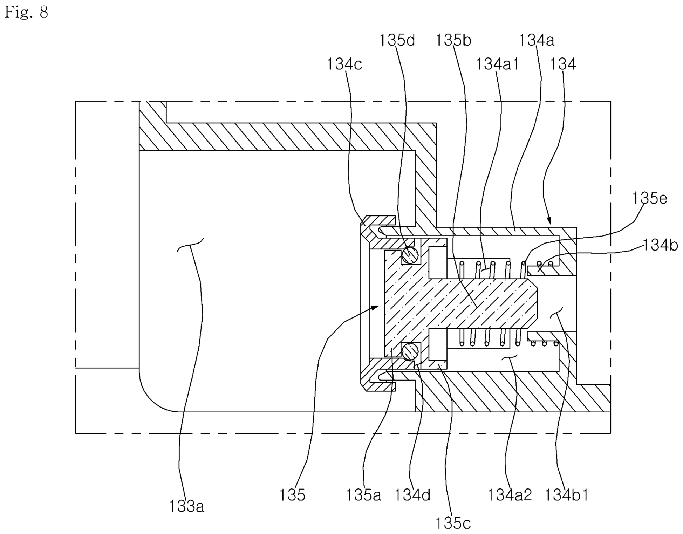

The connection port 134 includes a port perimeter wall 134a defining a valve installation space 134a2 in which a port valve 135 (see FIG. 8) to be described later is disposed. The port perimeter wall 134a protrudes forward from a front end of the recessed wall 133.

The port perimeter wall 134a may have a smaller diameter than the recessed wall 133. The supply hole 134a1 is formed on one side of the port perimeter wall 134a.

A water level sensor 137 is disposed on one side of the tank body 132. The water level sensor 137 may be disposed on one side wall of the tank body 132. The water level sensor 137 may detect an amount of the cleaning solution stored inside the tank body 132.

Accordingly, in response to detecting that the cleaning solution stored inside the tank body 132 is below a predetermined level, a notification may be sent to a user. The window cleaning apparatus may display, on the display 120, the capacity of the cleaning solution stored in the cleaning solution tank 130.

The tank body 132 may include an inner wall 136 disposed in a region where the water level sensor 137 is disposed. The inner wall 136 protrudes inward from the side wall of the tank body 132.

Referring to FIG. 8, a specific structure of the connection port disposed in the cleaning solution tank will be described below.

The connection port 134 is disposed at a front side of the insertion space 133a. A valve hole 134d that is opened in the front-rear direction is formed in the connection port 134.

The connection port 134 is provided with the port valve 135 that opens and closes the valve hole 134d. The port valve 135 may open or close the valve hole 134d by moving forward and backward.

The connection port 134 defines the valve installation space 134a2 in which the port valve 135 is disposed. The connection port 134 includes the port perimeter wall 134a defining the valve installation space 134a2. The supply hole 134a1 is formed on one side of the port perimeter wall 134a.

A guide portion 134b defined by the guide hole 134b1 is disposed at a front end of the connection port 134. A moving guider 135b to be described below is disposed in the guide hole 134b1. The moving guider 135b is disposed in the guide hole 134b1 formed in the guide portion 134b.

The guide portion 134b is disposed inside the port perimeter wall 134a. The guide portion 134b has a smaller diameter than the port perimeter wall 134a.

The port valve 135 includes a valve plate 135a for opening and closing the valve hole 134d, and the moving guider 135b for guiding forward and backward movement of the valve plate 135a.

The port valve 135 includes a stopper plate 135c that limits backward movement of the port valve 135. The stopper plate 135c is spaced apart from the valve plate 135a.

The stopper plate 135c limits backward movement of the port valve 135 by coming into contact with a port sealer 134c which will be described below.

The port valve 135 includes a valve sealer 135d disposed between the valve plate 135a and the stopper plate 135c. The valve sealer 135d may come into close contact with the port sealer 134c which will be described below. The valve sealer 135d may come into contact with the port sealer 134c when the port valve 135 closes the valve hole 134d.

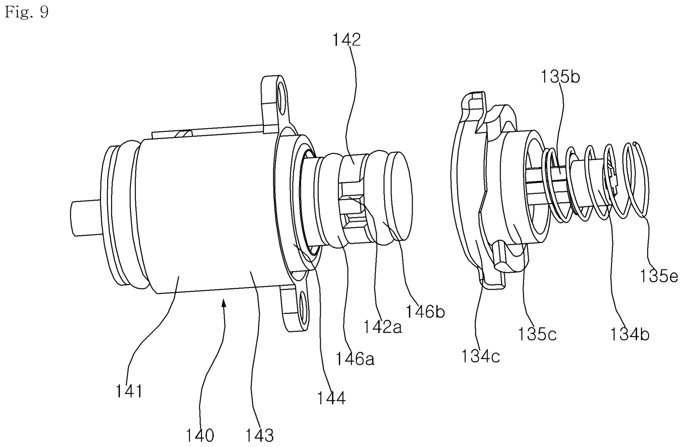

The connection port 134 includes the port sealer 134c formed around the valve hole 134d. The port sealer 134c may seal a space between the port valve 135 and an insertion pipe 142 (see FIG. 9) of a pipe connector 140 (see FIG. 9) which will be described below.

The connection port 134 includes a valve spring 135e disposed between the connection port 134 and the port valve 135. The valve spring 135e pushes the port valve 135 backward so that the port valve 135 blocks the valve hole 134d, when no separate force is applied to the port valve 135.

Referring to FIG. 9, the configuration of the pipe connector and the port valve will be described below.

The pipe connector 140 includes a connector body 141, and a moving body 144 disposed in the connector body 141 so as to be movable forward and backward.

FIG. 9 illustrates a state in which the moving body 144 is pushed backward.

The connector body 141 includes an insertion pipe 142 inserted into the connection port 134 when coupled to the connection port 134, and an outer separation pipe 143 spaced apart from the insertion pipe 142 in an outer circumferential direction of the insertion pipe 142.

A communication hole 142a is formed in a circumferential surface of the insertion pipe 142. The cleaning solution may flow into the pipe connector 140 through the communication hole 142a.

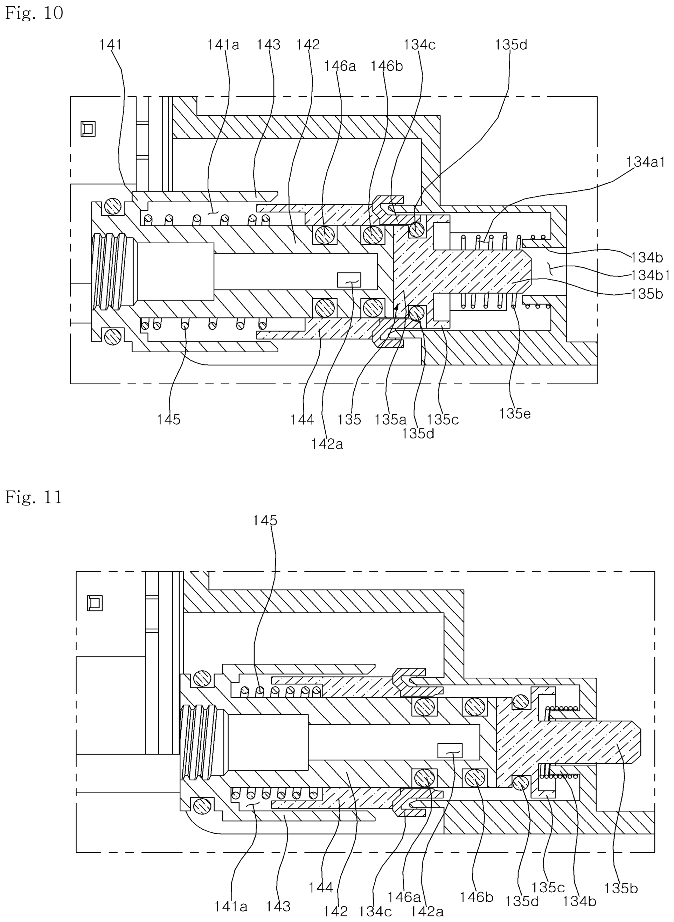

A recess 141a (see FIG. 10), into which a portion of the moving body 144 is inserted, is formed in the connector body 141. The recess 141a is formed between the insertion pipe 142 and the outer separation pipe 143.

The pipe connector 140 includes a connector spring 145 (see FIG. 10) that pushes the moving body 144. The connector spring 145 is disposed in the recess 141a.

The pipe connector 140 includes a first connector sealer 146a disposed on an outer circumference of the insertion pipe 142, and a second connector sealer 146b disposed on an outer circumference of the insertion pipe 142 and spaced apart from the first connector sealer 146a.

The communication hole 142a is formed between the first connector sealer 146a and the second connector sealer 146b. When the moving body 144 moves backward, the communication hole 142a may be exposed to the outside.

Referring to FIGS. 10 and 11, a moving structure and a sealing structure of a valve according to a position of the connector will be described below.

FIG. 10 illustrates the arrangement of the pipe connector and the port valve in a state in which the insertion pipe 142 is not inserted into the connection port 134. FIG. 11 illustrates the arrangement of the pipe connector and the port valve 135 in a state in which the insertion pipe 142 is inserted into the connection port 134.

First, referring to FIG. 10, the arrangement of the pipe connector 140 and the port valve 135 in a state in which the valve hole 134d of the connection port 134 is closed will be described below.

The valve sealer 135d and the port sealer 134c contact each other when the valve hole 134d is closed. Accordingly, the valve plate 135a closes the valve hole 134d.

Accordingly, the cleaning solution stored in the cleaning solution tank 130 is not discharged to the outside.

A closed state of the valve hole 134d may be the same as the state in which the pipe connector 140 is not disposed in the insertion space 133a.

Referring to FIG. 11, the arrangement of the pipe connector 140 and the port valve 135 in a state in which the valve hole 134d of the connection port 134 is open will be described below.

The insertion pipe 142 of the pipe connector 130 is inserted into the connection port 134 when the valve hole 134d is open.

When the tank cover 114 closes the tank hole 113, the inner surface of the tank cover 114 may cause the connection port 134 to come into close contact with the pipe connector 140. That is, the inner surface of the tank cover 144 pushes the cleaning solution tank 130 backward so as to move it to the rear where the pipe connector 140 is disposed.

When the valve hole 134d is open, the communication hole 142a formed in the insertion pipe 142 is positioned inside the connection port 134. Accordingly, the cleaning solution, discharged through the supply hole 134a1 formed in the connection port 134, may flow into the communication hole 142a formed in the insertion pipe 142.

The port sealer 134c and the first connector sealer 146a contact each other when the valve hole 134d is open. Accordingly, it is possible to prevent the cleaning solution from being discharged to the outside through the valve hole 134d of the connection port 134.

When the valve hole 134d is open, the moving body 144 moves to the recess 141a. the moving body 144 comes into contact with the port sealer 134c and moves backward. Accordingly, the insertion pipe 142 is exposed to the outside when the valve hole 134d is open.

When the valve hole 134d is open, the insertion pipe 142 exposed to the outside is inserted into the connection port 134. When the valve hole 134d is open, the insertion pipe 142 exposed to the outside is disposed in the valve installation space 134a2 formed inside the connection port 134.

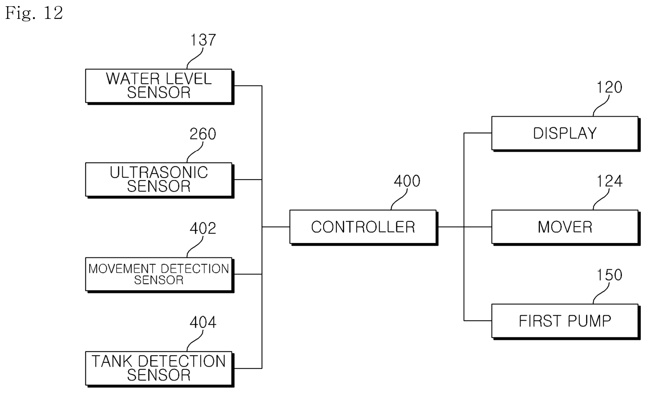

Referring to FIG. 12, a controller of the window cleaning apparatus and related components thereof will be described below.

The window cleaning apparatus of the present disclosure includes a controller 400.

The window cleaning apparatus of the present disclosure includes the water level sensor 137 configured to detect the level of the cleaning solution present inside the cleaning solution tank 130. The window cleaning apparatus includes the ultrasonic sensor 260 configured to detect a distance from the facing window 1.

The ultrasonic sensor 260 may determine whether the window is open based on the detected distance from the window 1.

The window cleaning apparatus of the present disclosure includes a tank detection sensor 404 configured to detect whether the cleaning solution tank 130 is mounted in the housing 102. A switch sensor may be used as the tank detection sensor 404.

Accordingly, when the cleaning solution tank 130 is mounted in the housing 102, the cleaning solution tank 130 may press the tank detection sensor 404.

The window cleaning apparatus of the present disclosure includes a movement detection sensor 402 configured to detect a position of the main body 100. A Hall sensor may be used as the movement detection sensor 402.

In addition, a rail 18 may include a magnet (not shown) for determining the position of the main body 100. Accordingly, the movement detection sensor 402 may detect a vertical position of the main body 100.

The controller 400 may provide notification or status indication on the display 120 based on mounting of the cleaning solution tank 130 which is detected by the tank detection sensor 404.

That is, if the cleaning solution tank 130 is mounted in the housing 102, it may be notified through the display 120 that the cleaning solution tank 130 is mounted. In addition, if the cleaning solution tank 130 is not mounted in the housing 102, it may be notified through the display that the cleaning solution tank 130 is not mounted.

The controller 400 may display a state of the window on the display 120 based on an opening state of the window which is detected by the ultrasonic sensor 260.

The controller 400 may provide notification for replenishment of the cleaning solution tank 130 on the display 120 based on the water level of the cleaning solution tank 130 which is detected by the water level sensor 137.

The controller 400 may move the main body 100 upward and downward by operating the mover 124. The controller 400 may control the operation of the first pump 150.

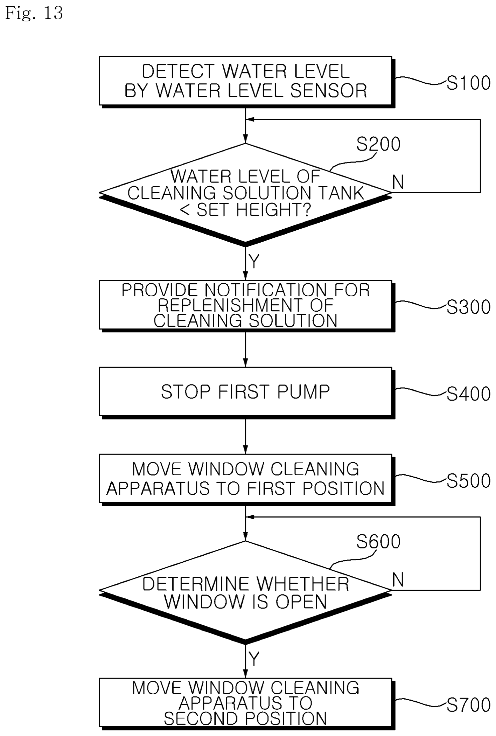

Referring to FIG. 13, a method of controlling the window cleaning apparatus will be described below.

Detecting, by the water level sensor 137, a water level of the cleaning solution present inside the cleaning solution tank 130 is performed in operation S100.

Then, determining whether the water level is lower than a set height is performed in operation S200, and providing notification for replenishment of the cleaning solution is performed in operation S300.

The controller 400 may provide notification that it is required to replenish the cleaning solution on the display 120.

Then, stopping the operation of the first pump 150 is performed in operation S400. If the first pump 150 is in operation, the controller 400 stops the operation of the first pump 150.

Accordingly, spraying of the cleaning solution through the spray nozzle 240 may be stopped. That is, when the window 1 is open, it is possible to prevent the cleaning solution from being sprayed into an indoor space.

Then, moving the window cleaning apparatus to a basic position is performed in operation S500. Here, the basic position may be a lowermost position where the main body 100 moves downward along the rail.

Moving to the basic position is performed to check the position of the main body 100.

Then, determining whether the window is open is performed in operation S600, and moving the window cleaning apparatus to a second position(or 'replacement position') is performed in operation S700.

The controller 400 moves the main body 100 from the basic position to a replacement position. The replacement position may be a position for replacing the cleaning solution tank 130.

If the main body 100 is disposed below the window 1 or the window frame 2, the tank cover 114 may not be opened. Accordingly, the replacement position may be a position where the tank cover 114 may be opened.

In addition, the replacement position may be a position suitable for a user to withdraw or insert the cleaning tank 130 from or into the housing 102.

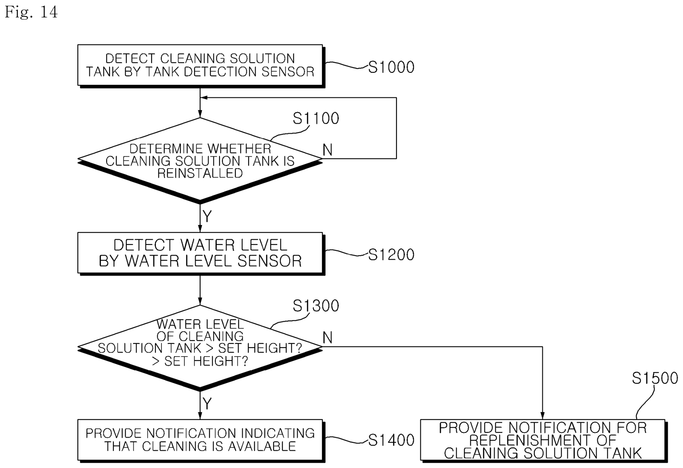

Referring to FIG. 14, a method of controlling the window cleaning apparatus after reinstalling the cleaning solution tank.

The controlling method of FIG. 14 may be performed after the controlling method of FIG. 13.

The controlling method of FIG. 14 includes, after replacing the cleaning solution tank 130, determining whether the cleaning solution tank 130 is correctly mounted or whether a water level of the cleaning solution is appropriate.

First, detecting, by the tank detection sensor 404, the cleaning solution tank 130 is performed in operation S1000. The tank detection sensor 404 detects whether the cleaning solution tank 130 is disposed inside the housing 102.

Then, determining whether the cleaning solution tank 130 is mounted in the housing 102 is performed in operation S1100, and detecting, by the water level sensor 137, the water level of the cleaning solution inside the cleaning solution tank 130 is performed in operation S1200.

Determining whether the water level of the cleaning solution tank 130 is above a set height is performed in operation S1300, and if the water level of the cleaning solution is above the set height, providing notification indicating that cleaning is available through the display 120 is performed in operation S1400.

However, if the water level of the cleaning solution is below the set height, providing notification for replenishment of the cleaning solution tank 130 through the display 120 is performed in operation S1500.

It will be apparent that, although the preferred embodiments have been illustrated and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A window cleaning apparatus (10) comprising:
a housing (102) forming an outer appearance and having a first surface (112) that faces a window (1); and
a cleaning solution tank (130) disposed inside the housing (102) and storing a cleaning solution supplied to a spray nozzle (240),
wherein the housing (102) has a tank hole formed in the first surface, so that the cleaning solution tank (130) is inserted and withdrawn through the tank hole (113).

2. The window cleaning apparatus (10) of claim 1, wherein the housing (102) comprises a tank cover that opens and closes the tank hole (113).

3. The window cleaning apparatus (10) of claim 2, wherein the tank cover (114) is configured to open toward a front where a window is positioned.

4. The window cleaning apparatus (10) of one of claims 1 to 3, further comprising:
a cleaning module (170) including the spray nozzle (240) that protrudes from the first surface (112) of the housing (102),
wherein the tank hole (113) is formed below the cleaning module (170).

5. The window cleaning apparatus (10) of claim 4, further comprising:
a net module (290) disposed on the first surface (112) of the housing (102), and configured to adjust a length of a net extending over the housing (102),
wherein the net module (290) is disposed above the cleaning module (170).

6. The window cleaning apparatus (10) of one of claims 1 to 5, further comprising:
a first pump (150) configured to supply the cleaning solution, stored in the cleaning solution tank (130), to the spray nozzle (240): and
a connection pipe (138) connecting the cleaning solution tank (130) and the first pump (150),
wherein when the cleaning solution tank (130) is disposed in the housing (102), the cleaning solution tank (130) is connected to the connection pipe (138), and a connection port connected to the connection pipe (138) is disposed on a rear surface of the cleaning solution tank (130).

7. The window cleaning apparatus (10) of one of claims 1 to 6, further comprising:
a display (120) configured to provide information about the cleaning solution tank (130),
wherein the display (120) is disposed on the first surface of the housing (102).

8. The window cleaning apparatus (10) of claim 7, further comprising:
a controller (400) configured to control the spray nozzle,
wherein the cleaning solution tank (130) comprises a water level sensor (137) configured to detect a water level of the cleaning solution stored in the cleaning solution tank (130),
wherein the controller (400) provides a notification through the display when the water level detected by the water level sensor (137) is less than or equal to a set level.

9. The window cleaning apparatus (10) of claim 8, wherein the cleaning solution tank (130) comprises an inner wall (136) spaced apart from one side of the water level sensor (137), and extending in an up-down direction.

10. The window cleaning apparatus (10) of one claims 1 to 9, wherein the spray nozzle (240) is disposed on the first surface (112) of the housing (102) so as to spray the cleaning solution toward the window (1).

11. A method of controlling a window cleaning apparatus (10), the method comprising:
detecting (S100) a water level of a cleaning solution tank (130) that stores a cleaning solution;
when the detected water level is lower than or equal to a set height, providing (S300) notification for replenishment of the cleaning solution; and
detecting (S600) whether a window (1) is open, and moving (S700) the window cleaning apparatus (10) to a replacement position.

12. The method of claim 11, further comprising, prior to moving (S700) the window cleaning apparatus (10) to the replacement position, moving the window cleaning apparatus (10) to a basic position.

13. The method of claim 11 or 12, further comprising, after providing (S300) the notification for replenishment of the cleaning solution, stopping (S400) operation of a first pump (150) that supplies the cleaning solution in the cleaning solution tank (130) to the spray nozzle (240).

14. The method of one of claims 11 to 13, wherein the detecting (S600) whether the window (1) is open is performed based on a change in distance from the window (1), by using an ultrasonic sensor (260).

15. The method of one of claim 11 to 14, further comprising:
detecting (S1000) the cleaning solution tank (130) by using a tank detection sensor (404);
when the cleaning solution tank(130) is reinstalled, detecting (S12000) a water level of the cleaning solution tank (130) by using a water level sensor (137); and
when the water level of the cleaning solution tank (130) exceeds a set height, providing (S1400) notification indicating that cleaning is available.
